# EUROPÄISCHE PATENTSCHRIFT

(11) **EP 2 296 927 B1**
(45) Veröffentlichungstag und Bekanntmachung des Hinweises auf die Patenterteilung: **07.03.2012**
(21) Anmeldenummer: 09757492.5
(22) Anmeldetag: 29.05.2009
(51) Int. Cl.: B60K 15/077, F02M 37/02, F02M 37/10

(54) **PUMPEINRICHTUNG ZUR FÖRDERUNG VON KRAFTSTOFF IN EINEM KRAFTSTOFFBEHÄLTER**
PUMP DEVICE FOR FEEDING FUEL IN A FUEL TANK
DISPOSITIF DE POMPAGE POUR REFOULER DU CARBURANT DANS UN RÉSERVOIR À CARBURANT

(30) Priorität: 04.06.2008 DE 102008026734
(43) Veröffentlichungstag der Anmeldung: 23.03.2011
(73) Patentinhaber: Continental Automotive GmbH, 30165 Hannover (DE)
(72) Erfinder: KIENINGER, Klemens, 35260 Stadtallendorf (DE); PENZAR, Zlatko, 60529 Frankfurt am Main (DE); TEICHERT, Michael, 65824 Schwalbach (DE)
(86) Internationale Anmeldenummer: PCT/EP2009/056661
(87) Internationale Veröffentlichungsnummer: WO 2009/147111

(56) Entgegenhaltungen:
- WO-A-2005/025915
- DE-A1-102005 043 888
- FR-A- 2 779 184

## Beschreibung

Die Erfindung betrifft eine Pumpeinrichtung zur Förderung von Kraftstoff in einem Kraftstoffbehälter eines Kraftfahrzeuges mit einer Saugstrahlpumpe, mit einer vor einem Mischrohr angeordneten Düse und einem zwischen Düse und Mischrohr angeordneten Ansaugbereich der Saugstrahlpumpe, mit einem Steuerventil zur Steuerung der Förderleistung der Saugstrahlpumpe und mit einem die Strömung eines Treibmittelstrahls durch die Düse steuernden Ventilkörper des Steuerventils, wobei der Ventilkörper zum Drosseln der Förderleistung der Saugstrahlpumpe gegen das dem Mischrohr zugewandte Ende der Düse bewegbar ist.

Eine solche Pumpeinrichtung ist aus der FR 2 779 184 A bekannt. Bei dieser Pumpeinrichtung ist in dem Mischrohr ein Körper angeordnet. Der Körper hat eine Führung für den Ventilkörper und ein Federelement zur Vorspannung des Ventilkörpers gegen den Ventilsitz.

Eine Pumpeinrichtung ist aus der DE 10 2005 043 888 A1 bekannt. Bei dieser Pumpeinrichtung ist die Saugstrahlpumpe in einer Flüssigkeitsfalle einer Entlüftungseinrichtung angeordnet und wird von einer Kraftstoffpumpe über eine Treibmittelleitung mit Kraftstoff als Treibmittel versorgt. Innerhalb der Flüssigkeitsfalle ist ein Füllstandsgrenzschalter angeordnet, welcher ein innerhalb der Treibmittelleitung angeordnetes Steuerventil ansteuert. Bei mit Kraftstoff gefüllter Flüssigkeitsfalle gibt das Steuerventil die Treibmittelleitung frei, so dass die Saugstrahlpumpe innerhalb der Flüssigkeitsfalle angesammelten Kraftstoff absaugt. Bei leerer Flüssigkeitsfalle versperrt das Steuerventil die Zufuhr von Kraftstoff zu der Saugstrahlpumpe und verhindert damit, dass unnötig Kraftstoff innerhalb des Kraftstoffbehälters gefördert wird. Damit wird eine Schaumbildung im Kraftstoffbehälter verhindert. Zudem wird bei ungeregelten Kraftstoffpumpen Treibstrahlvolumenstrom eingespart, der für die Brennkraftmaschine des Kraftfahrzeuges zur Verfügung steht. Bei geregelten Kraftstoffpumpen wird hierdurch elektrische Energie eingespart.

Nachteilig bei der bekannten Pumpeinrichtung ist, dass der Ventilkörper ständig dem Druck der Treibmittelleitung ausgesetzt ist. Zudem wird der Ventilkörper beim Schließen des Steuerventils in Strömungsrichtung direkt in die Düse der Saugstrahlpumpe bewegt. Ein möglicher, innerhalb der Treibmittelleitung angeordneter Überdruck kann bei geschlossenem Steuerventil nicht entweichen. Ein Öffnen des Steuerventils ist daher nur mit einem hohen Kraftaufwand gegen den Druck innerhalb der Treibmittelleitung möglich.

Weiterhin ist aus der Praxis eine Pumpeinrichtung bekannt geworden, bei der das Mischrohr der Saugstrahlpumpe verschlossen wird, wenn eine Förderung von Kraftstoff nicht gewünscht ist. Dies führt jedoch bei geschlossenem Mischrohr zu einer Überströmung von Kraftstoff aus der Treibmittelleitung in den Ansauganschluss. Damit vermag diese Pumpeinrichtung ein unnötiges Fördern von Kraftstoff nicht zu verhindern.

Der Erfindung liegt das Problem zugrunde, eine Pumpeinrichtung der eingangs genannten Art so weiterzubilden, dass sie ein unnötiges Fördern von Kraftstoff innerhalb des Kraftstoffbehälters vermeidet und dass der Kraftaufwand zum Öffnen des Steuerventils möglichst gering gehalten wird.

Dieses Problem wird erfindungsgemäß dadurch gelöst, dass der Ventilkörper auf einem durch das Mischrohr geführten Schaft angeordnet ist, dass der Schaft mit einem Schwimmer zur Ansteuerung des Steuerventils verbunden ist und dass der Schwimmer unmittelbar auf dem Schaft befestigt ist und dass zwischen einem Schwimmer zur Steuerung des Steuerventils und dem freien Ende des Mischrohrs eine die Stellung des Schwimmers vor der Beeinflussung durch die Förderung der Saugstrahlpumpe gering haltende Wandung angeordnet ist.

Durch diese Gestaltung erfolgt die Schließrichtung des Ventilkörpers gegen die Strömungsrichtung innerhalb der Treibmittelleitung. Damit unterstützt der Druck innerhalb der Treibmittelleitung die Öffnungsbewegung des Steuerventils. Ein Kraftaufwand zum Öffnen des Steuerventils wird dank der Erfindung besonders gering gehalten. Da das Steuerventil unmittelbar die Strömung an der Düse der Saugstrahlpumpe steuert, lässt sich eine unnötige Förderung von Kraftstoff einfach vermeiden. Ein weiterer Vorteil dieser Gestaltung besteht darin, dass eine Störung der Strömung innerhalb der Treibmittelleitung bei geöffnetem Steuerventil weitgehend vermieden wird. Die Steuerung des wirksamen Querschnitts der Düse könnte von der dem Mischrohr abgewandten Seite und damit durch die Düse hindurch erfolgen. Eine Drosselung der Strömung des Kraftstoffs bei geöffnetem Steuerventil lässt sich jedoch besonders gering halten, weil der Ventilkörper auf einem durch das Mischrohr geführten Schaft angeordnet ist. Der bauliche Aufwand zur Ansteuerung des Steuerventils lässt sich besonders gering halten, weil der Schaft mit einem Schwimmer zur Ansteuerung des Steuerventils verbunden ist. Diese Gestaltung ermöglicht es zudem, den Füllstand in einem Schwalltopf eines Kraftstoffbehälters einfach konstant zu halten, wenn der Schwimmer in dem Schwalltopf angeordnet ist und die Saugstrahlpumpe zur Förderung von Kraftstoff in den Schalltopf ausgebildet ist. Eine Beeinflussung der Stellung des Schwimmers durch die Förderung der Saugstrahlpumpe lässt sich besonders gering halten, weil der Schwimmer unmittelbar auf dem Schaft befestigt ist und wenn zwischen einem Schwimmer zur Steuerung des Steuerventils und dem freien Ende des Mischrohrs eine Wandung angeordnet ist. Weiterhin weist hierdurch die erfindungsgemäße Pumpeinrichtung eine besonders geringe Anzahl an beweglichen Bauteilen auf.

Der Ventilkörper könnte zum Drosseln der Förderleistung der Saugstrahlpumpe beispielsweise quer auf das dem Mischrohr zugewandte Ende der Düse verschwenkt werden. Eine besonders einfache Steuerung des wirksamen Querschnitts der Düse und damit der Förderleistung der Saugstrahlpumpe lässt sich gemäß einer vorteilhaften Weiterbildung der Erfindung einfach erreichen, wenn die Bewegungsrichtung des Ventilkörpers zum Drosseln der Strömung des Treibmittelstrahls entgegen der Strömungsrichtung des Treibmittelstrahls geführt ist. Wegen der Bewegungsrichtung des Ventilkörpers zum Drosseln der Förderleistung weist das Steuerventil zudem die Funktion eines Überdruckventils auf und ermöglicht ein Entweichen eines Überdrucks in der Treibmittelleitung.

Zur weiteren Verringerung der Drosselung der Strömung des Kraftstoffs bei geöffnetem Steuerventil trägt es bei, wenn der Ventilkörper kegelförmig, sich zu dem dem Mischrohr zugewandten Ende der Düse hin verjüngend gestaltet ist. Diese Gestaltung ist insbesondere bei dem auf dem durch das Mischrohr geführten Schaft angeordneten Ventilkörper von Vorteil, da in der Offenstellung des Steuerventils der Ventilkörper in das Mischrohr geschoben werden kann und durch seine kegelförmige Gestalt der meist ebenfalls kegelförmigen Kontur des Einlassbereichs des Mischrohrs angepasst ist. Dabei kann der Ventilkörper auf die Düse hin spitz zulaufen. Damit trägt das Steuerventil in seiner geöffneten Stellung zur Funktion der Saugstrahlpumpe bei.

Das Steuerventil stellt im geschlossenen Zustand gemäß einer anderen vorteilhaften Weiterbildung der Erfindung eine hohe Dichtheit der Düse sicher, wenn die Düse an ihrem dem Mischrohr zugewandten Ende einen dem Ventilkörper entsprechend gestalteten Ventilsitz hat. Hierdurch wird eine Leckage von in der Treibmittelleitung stehendem Kraftstoff besonders gering gehalten.

Die erfindungsgemäße Pumpeinrichtung gestaltet sich konstruktiv besonders einfach, wenn das Mischrohr in eine Flüssigkeitsfalle geführt ist und wenn die den Schwimmer von dem Mischrohr trennende Wandung Teil der Flüssigkeitsfalle ist.

Die Montage der erfindungsgemäßen Pumpeinrichtung in dem Kraftstoffbehälter gestaltet sich besonders einfach, wenn die Saugstrahlpumpe innerhalb eines zum Sammeln von Kraftstoff ausgebildeten Schwalltopfes angeordnet ist. Durch diese Gestaltung können die Bauteile der erfindungsgemäßen Pumpeinrichtung und der Schwalltopf einfach außerhalb des Kraftstoffbehälters zu einer baulichen Einheit vormontiert und gemeinsam in den Kraftstoffbehälter eingesetzt werden. Zudem können die Bauteile der erfindungsgemäßen Pumpeinrichtung und des Schwalltopfes außerhalb des Kraftstoffbehälters einfach auf ihre Funktion geprüft werden. Vorzugsweise ist auch die Flüssigkeitsfalle innerhalb des Schwalltopfes angeordnet.

Zur weiteren Verringerung der Fertigungskosten der erfindungsgemäßen Fördereinheit trägt es bei, wenn die Flüssigkeitsfalle als Tasche einer Seitenwand oder eines Deckels des Schwalltopfes ausgebildet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch einen in einem Kraftstoffbehälter angeordneten Schwalltopf mit einer darin angeordneten erfindungsgemäßen Pumpeinrichtung,
- Fig. 2: eine Schnittdarstellung durch die Pumpeinrichtung entlang der Linie II - II aus Figur 1.

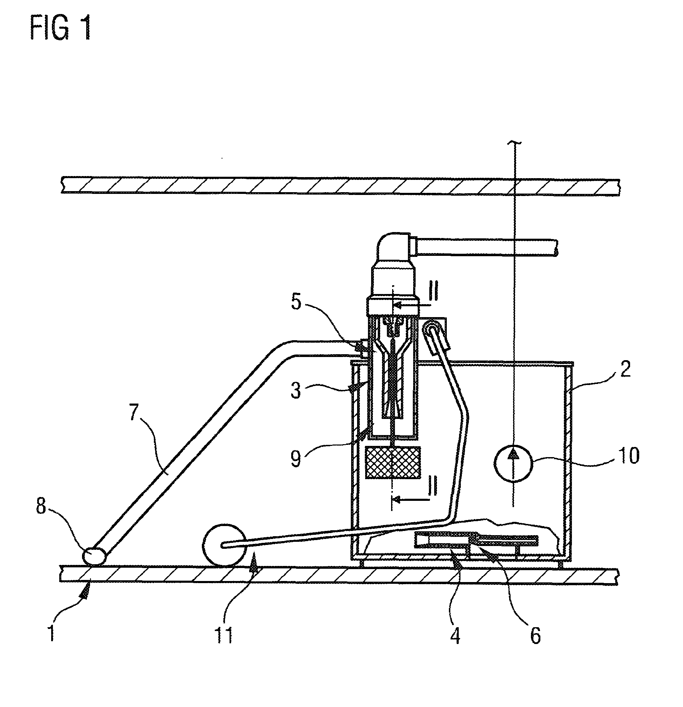

Figur 1 zeigt einen innerhalb eines Kraftstoffbehälters 1 eines Kraftfahrzeuges angeordneten Schwalltopf 2 und mit einer ersten Pumpeinrichtung 3 und einer zweiten Pumpeinrichtung 4 zur Förderung von Kraftstoff in den Schwalltopf 2. Die beiden Pumpeinrichtungen 3, 4 weisen jeweils eine Saugstrahlpumpe 5, 6 auf. Die erste Pumpeinrichtung 3 ist über eine Saugleitung 7 mit einem von dem Schwalltopf 2 entfernten Sauganschluss 8 verbunden. Im Betrieb der Pumpeinrichtungen 3, 4 und bei leerem Schwalltopf 2 saugt die erste Pumpeinrichtung 3 Kraftstoff über die Saugleitung 7 von dem entfernten Sauganschluss 8 an, während die zweite Pumpeinrichtung 4 Kraftstoff unmittelbar aus der Umgebung des Schwalltopfes 2 ansaugt. Die Pumpeinrichtungen 3, 4 fördern gemeinsam Kraftstoff in den Schwalltopf 2. Die erste Pumpeinrichtung 3 ist in einer als Tasche des Schwalltopfs 2 ausgebildeten Flüssigkeitsfalle 9 im Schwalltopf 2 angeordnet. Die zweite Pumpeinrichtung 4 befindet sich im Bodenbereich des Schwalltopfes 2. Eine innerhalb des Schwalltopfes 2 angeordnete und schematisch dargestellte, elektrisch angetriebene Kraftstoffpumpe 10 saugt Kraftstoff aus dem Schwalltopf 2 an und fördert diesen zu einer nicht dargestellten Brennkraftmaschine des Kraftfahrzeuges und als Treibmittel zu den Saugstrahlpumpen 5, 6. Die Pumpeinrichtungen 3, 4 stellen damit sicher, dass jederzeit ausreichend Kraftstoff im Schwalltopf 2 vorhanden ist, so dass die Kraftstoffpumpe Kraftstoff aus dem Schwalltopf ansaugen kann. Weiterhin zeigt Figur 1, dass an dem Schwalltopf 2 ein Füllstandssensor 11 zur Erfassung des Füllstandes an Kraftstoff im Kraftstoffbehälter 1 angeordnet ist.

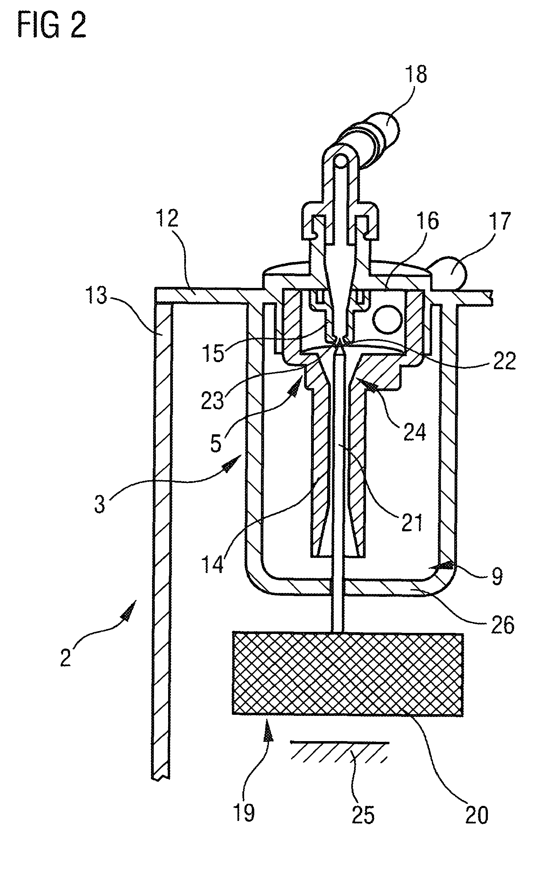

Figur 2 zeigt eine Schnittdarstellung durch den die erste Pumpeinrichtung 3 aufweisenden Teilbereich des Schwalltopfes 2 aus Figur 1 entlang der Linie II - II. Hierbei ist zu erkennen, dass die Flüssigkeitsfalle 9 an einem Deckel 12 des Schwalltopfes 2 angeordnet ist. Der Deckel 12 ist mit einer Seitenwand 13 des Schwalltopfes 2 verbunden, die Saugstrahlpumpe 5 der ersten Pumpeinrichtung 3 mit einer vor einem Mischrohr 14 angeordneten Düse 15. Zwischen der Düse 15 und dem Mischrohr 14 ist ein Ansaugbereich 16 angeordnet, welcher über einen Saugstutzen 17 eine Verbindung mit der in Figur 1 dargestellten Saugleitung 7 hat. Das freie Ende des Mischrohrs 14 mündet in die Flüssigkeitsfalle 9. Die Saugstrahlpumpe 5 hat einen Treibmittelanschluss 18 zur Verbindung mit der Druckseite der in Figur 1 dargestellten Kraftstoffpumpe 10.

Weiterhin hat die erste Pumpeinrichtung 3 ein Steuerventil 19, welches bei gefülltem Schwalltopf 2 die Förderleistung der Saugstrahlpumpe 5 drosselt. Damit vermeidet das Steuerventil 19 eine unnötige Förderung von Kraftstoff, wenn der Schwalltopf 2 bereits mit Kraftstoff gefüllt ist. Hierfür hat das Steuerventil 19 einen innerhalb des Schwalltopfes 2 angeordneten Schwimmer 20 zur Erfassung eines vorgesehenen maximalen Füllstandes im Schwalltopf 2. Der Schwimmer 20 ist über einen Schaft 21 mit einem Ventilkörper 22 des Steuerventils 19 verbunden. Die Düse 15 hat auf der dem Mischrohr 14 zugewandten Seite einen mit dem Ventilkörper 22 zusammenwirkenden Ventilsitz 23. Bei steigendem Füllstand an Kraftstoff im Schwalltopf 2 wird der Schwimmer 20 angehoben, wodurch der Ventilkörper 22 gegen den Ventilsitz 23 gedrückt wird. Damit wird mit steigendem Füllstand im Schwalltopf 2 die Förderleistung der Saugstrahlpumpe 5 der ersten Pumpstufe 3 gedrosselt. Der Ventilkörper 22 ist kegelförmig gestaltet. In der Offenstellung des Steuerventils 19 befindet sich der kegelförmig gestaltete Ventilkörper 22 in einem konisch gestalteten Abschnitt 24 des Mischrohrs 14. Der Bewegungsbereich des Schwimmers 20 wird von einem schematisch dargestellten Anschlag 25 begrenzt. In einer alternativen, nicht dargestellten Ausführungsform kann der Bewegungsbereich des Ventilkörpers 22 von einem in der Düse 15 angeordneten Anschlag begrenzt sein. Zwischen dem offenen Ende des Mischrohrs 14 und dem Schwimmer 20 ist eine Wandung 26 angeordnet. Die Wandung 26 ist Teil eines Bodens der Flüssigkeitsfalle 9 und verhindert, dass ein von der Saugstrahlpumpe 5 erzeugter Strahl die Bewegung des Schwimmers 20 beeinflusst.

Selbstverständlich kann das Steuerventil bei entsprechender Umlenkung der Bewegung des Schwimmers auch bei der in Figur 1 dargestellten zweiten Pumpeinrichtung vorgesehen sein, um auch hier die Förderleistung in Abhängigkeit von dem Füllstand im Schwalltopf zu regeln.

## Patentansprüche

1. Pumpeinrichtung zur Förderung von Kraftstoff in einem Kraftstoffbehälter (1) eines Kraftfahrzeuges mit einer Saugstrahlpumpe (5, 6), mit einer vor einem Mischrohr (14) angeordneten Düse (15) und einem zwischen Düse (15) und Mischrohr (14) angeordneten Ansaugbereich (16) der Saugstrahlpumpe (5, 6), mit einem Steuerventil (19) zur Steuerung der Förderleistung der Saugstrahlpumpe (5, 6) und mit einem die Strömung eines Treibmittelstrahls durch die Düse (15) steuernden Ventilkörper (22) des Steuerventils (19), wobei der Ventilkörper (22) zum Drosseln der Förderleistung der Saugstrahlpumpe (5, 6) gegen das dem Mischrohr (14) zugewandte Ende der Düse (15) bewegbar ist, **dadurch gekennzeichnet, dass** der Ventilkörper (22) auf einem durch das Mischrohr (15) geführten Schaft (21) angeordnet ist, dass der Schaft (21) mit einem Schwimmer (20) zur Ansteuerung des Steuerventils (19) verbunden ist und dass der Schwimmer (20) unmittelbar auf dem Schaft (21) befestigt ist und dass zwischen einem Schwimmer (20) zur Steuerung des Steuerventils (19) und dem freien Ende des Mischrohrs (14) eine die Stellung des Schwimmers (20) vor der Beeinflussung durch die Förderung der Saugstrahlpumpe (5) gering haltende Wandung (26) angeordnet ist.

2. Pumpeinrichtung nach Anspruch 1, **dadurch ge- kennzeichnet**, dass die Bewegungsrichtung des Ventilkörpers (22) zum Drosseln der Strömung des Treibmittelstrahls entgegen der Strömungsrichtung des Treibmittelstrahls geführt ist.

3. Pumpeinrichtung nach Anspruch 1 oder 2, **dadurch gekennzeichnet , dass** der Ventilkörper (22) kegelförmig, sich zu dem dem Mischrohr (14) zugewandten Ende der Düse (15) hin verjüngend gestaltet ist.

4. Pumpeinrichtung nach einem der vorhergehenden Ansprüche, **dadurch gekennzeichnet , dass** die Düse (15) an ihrem dem Mischrohr (15) zugewandten Ende einen dem Ventilkörper (22) entsprechend gestalteten Ventilsitz (23) hat.

5. Pumpeinrichtung nach einem der vorhergehenden Ansprüche, **dadurch gekennzeichnet , dass** das Mischrohr (14) in eine Flüssigkeitsfalle (9) geführt ist und dass die den Schwimmer (20) von dem Mischrohr (14) trennende Wandung ((26) Teil der Flüssigkeitsfalle (9) ist.

6. Pumpeinrichtung nach einem der vorhergehenden Ansprüche, **dadurch gekennzeichnet , dass** die Saugstrahlpumpe (5) innerhalb eines zum Sammeln von Kraftstoff ausgebildeten Schwalltopfes (2) angeordnet ist.

7. Pumpeinrichtung nach Anspruch 5 oder 6, **dadurch gekennzeichnet , dass** die Flüssigkeitsfalle (9) als Tasche einer Seitenwand (13) oder eines Deckels (12) des Schwalltopfes (2) ausgebildet ist.

## Claims

1. Pump device for feeding fuel in a fuel tank (1) of a motor vehicle, having a suction jet pump (5, 6), having a nozzle (15) arranged upstream of a mixing tube (14) and an intake region (16) of the suction jet pump (5, 6), the intake region (16) being arranged between the nozzle (15) and mixing tube (14), having a control valve (19) for controlling the feed rate of the suction jet pump (5, 6), and having a valve body (22) of the control valve (19) controlling the flow of a propellant jet through the nozzle (15), wherein the valve body (22) can be moved toward that end of the nozzle (15) which faces the mixing tube (14) in order to throttle the feed rate of the suction jet pump (5, 6), **characterized in that** the valve body (22) is arranged on a shaft (21) which is guided through the mixing tube (15), **in that** the shaft (21) is connected to a float (20) for activating the control valve (19), and **in that** the float (20) is fastened directly on the shaft (21), and **in that** a wall (26), keeping the effect on the position of the float (20) by means of the feeding carried out by the suction jet pump (5) small is arranged between a float (20) for controlling the control valve (19) and the free end of the mixing tube (14).

2. Pump device according to Claim 1, **characterized in that** the direction of movement of the valve body (22) is guided counter to the direction of flow of the propellant jet in order to throttle the flow of the propellant jet.

3. Pump device according to Claim 1 or 2, **characterized in that** the valve body (22) is of conical configuration, tapering toward that end of the nozzle (15) which faces the mixing tube (14).

4. Pump device according to one of the preceding claims, **characterized in that** that end of the nozzle (15) which faces the mixing tube (15) has a valve seat (23) configured in a manner corresponding to the valve body (22).

5. Pump device according to one of the preceding claims, **characterized in that** the mixing tube (14) is guided into a liquid trap (9), and **in that** the wall (26) separating the float (20) from the mixing tube (14) is part of the liquid trap (9).

6. Pump device according to one of the preceding claims, **characterized in that** the suction jet pump (5) is arranged within a surge pot (2) designed to collect fuel.

7. Pump device according to Claim 5 or 6, **characterized in that** the liquid trap (9) is designed as a pocket in a side wall (13) or in a cover (12) of the surge pot (2).

## Revendications

1. Dispositif de pompage pour refouler du carburant dans un réservoir (1) à carburant d'un véhicule automobile, comprenant une pompe (5, 6) aspirante à jet, une buse (15) placée devant un tube (14) de mélange et une zone (16) d'aspiration, disposée entre la buse (15) et le tube (14) de mélange, de la pompe (5, 6) aspirante à jet, une vanne (19) de commande, pour commander la puissance de la pompe (5, 6) aspirante à jet, et un corps (22), commandant l'écoulement d'un jet de fluide moteur dans la buse (15), de la vanne (19) de commande, dans lequel le corps (22) de vanne est, pour diminuer la puissance de la pompe (5, 6) aspirante à jet, mobile vers l'extrémité, tournée vers le tube (14) de mélange, de la buse (15), **caractérisé en ce que** le corps (22) de vanne est monté sur une tige (21) passant dans le tube (15) de mélange, **en ce que** la tige (21) est reliée à un flotteur (20) pour commander la vanne (19) de commande et **en ce que** le flotteur (20) est fixé directement sur la tige (21) et **en ce que**, entre un flotteur (20) pour la commande de la vanne (19) et l'extrémité libre du tube (14) de mélange, est disposée une paroi (26) maintenant faiblement la position du flotteur (20) vis-à-vis de l'influence de la puissance de la pompe (5) aspirante à jet.

2. Dispositif de pompage suivant la revendication 1, **caractérisé en ce que** le sens de déplacement du corps (22) de vanne, pour diminuer le courant du jet de fluide moteur, est contraire au sens d'écoulement du jet de fluide moteur.

3. Dispositif de pompage suivant la revendication 1 ou 2, **caractérisé en ce que** le corps (22) de vanne est conique en se rétrécissant vers l'extrémité, tournée vers le tube (14) de mélange, de la buse (15).

4. Dispositif de pompage suivant l'une des revendications précédentes, **caractérisé en ce que** la buse (15) a, à son extrémité tournée vers le tube (15) de mélange, un siège (23) de vanne conformé conformément au corps (22) de vanne.

5. Dispositif de pompage suivant l'une des revendications précédentes, **caractérisé en ce que** le tube (14) de mélange est guidé dans un puits (9) à liquide et **en ce que** la paroi (26) séparant le flotteur (20) du tube (14) de mélange fait partie du piège (9) à liquide.

6. Dispositif de pompage suivant l'une des revendications précédentes, **caractérisé en ce que** la pompe (5) aspirante à jet est disposée à l'intérieur d'un pot (2) à ondes positives constitué pour collecter du carburant.

7. Dispositif de pompage suivant la revendication 5 ou 6, **caractérisé en ce que** le puits (9) à liquide est constitué sous la forme d'une poche d'une paroi (13) latérale ou d'un couvercle (12) du pot (2) à ondes positives.
